# EUROPÄISCHE PATENTSCHRIFT

(11) **EP 1 841 547 B1**
(45) Veröffentlichungstag und Bekanntmachung des Hinweises auf die Patenterteilung: **01.04.2009**
(21) Anmeldenummer: 06700514.0
(22) Anmeldetag: 13.01.2006
(51) Int. Cl.: B08B 9/42, B67C 7/00, B67C 3/24, B65G 47/84

(54) **VERFAHREN UND VORRICHTUNG ZUM HALTEN VON GEFÄSSEN**
METHOD AND DEVICE FOR HOLDING VESSELS
PROCEDE ET DISPOSITIF PERMETTANT DE TENIR DES RECIPIENTS

(30) Priorität: 20.01.2005 DE 102005002715
(43) Veröffentlichungstag der Anmeldung: 10.10.2007
(73) Patentinhaber: Krones Aktiengesellschaft, 93068 Neutraubling (DE)
(72) Erfinder: HAUSLADEN, Wolfgang, 93099 Mötzing (DE)
(86) Internationale Anmeldenummer: PCT/EP2006/000257
(87) Internationale Veröffentlichungsnummer: WO 2006/077050

(56) Entgegenhaltungen:
- DE-A1- 10 234 374
- DE-U1- 20 305 988

## Beschreibung

Die Erfindung betrifft eine Vorrichtung mit einem Halter zum Halten von einem Gefäß wie etwa einer Flasche, wobei das Gefäß eine bestimmte Größe aufweist. Weiterhin betrifft die Erfindung ein Verfahren zum Belegen einer Vorrichtung mit Gefäßen, wie etwa Flaschen, wobei die Gefäße einer Größe in einen ersten Halter gegeben werden.

Bekannt sind Flaschenbehandlungsmaschinen, Flaschentransporteure und Flaschenspeicher bei denen Flaschen mit einem Halter gehalten werden. So ist beispielsweise aus der DE 29 71 35 10 ein Rotationsfüller mit Halteelementen für Flaschen bekannt, die starr oder höhenbeweglich an einem Rotor angeordnet sind.

Aus der EP 0 721 808 ist eine Reinigungsmaschine für Gefäße bekannt, bei der die Gefäße mit Haltern gehalten werden können, die schwenkbar an einem Rotor gelagert sind.

Aus der EP 1 295 820 A1 ist ein dynamischer Flaschenspeicher mit mehreren Endlosketten bekannt, die mit greiferartigen Haltern für den Hals von Gefäßen besetzt sind.

Nachteilig bei diesen vorbekannten Maschinen bzw. Transporteuren ist, dass die Halter nur für eine Flaschengröße ausgebildet sind, sodass immer nur eine Flaschensorte behandelt bzw. transportiert werden kann. Es gibt zwar die Möglichkeit, die Halter auszutauschen, um so auch andere Flaschen behandeln zu können. Diese Umrüstarbeiten dauern jedoch relativ lange, sodass mit dem Umrüsten erhebliche Kosten verbunden sind.

Bekannt sind auch Greifer, die so ausgebildet sind, dass sie Flaschen verschiedener Größen aufnehmen können. Diese Greifer sind jedoch entweder mechanisch sehr aufwendig oder können verschieden große Flaschen nur ungenügend fixieren.

Aufgabe der vorliegenden Erfindung ist es daher, eine Vorrichtung und ein Verfahren zu schaffen, mit dem es in möglichst kostengünstiger und zuverlässiger Weise möglich ist, Gefäße verschiedener Größe zu verarbeiten.

Diese Aufgabe wird gelöst durch eine Vorrichtung nach Anspruch 1 und ein Verfahren nach Anspruch 14.

Bevorzugte Ausführungsformen sind in den Unteransprüchen offenbart.

Bei der erfindungsgemäßen Vorrichtung ist mindestens ein zweiter Halter vorgesehen, der anders ist, als der erste Halter. Dieser zweite Halter kann ein Gefäß einer anderen Größe aufnehmen. Durch die zwei verschiedenen Halter ist es möglich, Gefäße verschiedener Größe zu verwenden, ohne die Vorrichtung umrüsten zu müssen. Die Halter können hierbei so ausgebildet sein, dass sie nur die Gefäße einer bestimmten einzelnen Größe aufnehmen können oder so, dass sie die Gefäße mit einer Größe in einem bestimmten Größenbereich aufnehmen können. Auch ist es möglich, einen Halter für ein Gefäß mit einer festen Größe und einen anderen Halter mit der Aufnahmemöglichkeit für Gefäße aus einem bestimmten Größenbereich vorzusehen.

Werden zwei Halter mit einem verschiedenen aber sich überlappenden Größenbereich vorgesehen, so wird der insgesamt zur Verfügung stehende Größenbereich der verwendbaren Gefäße erweitert, ohne dass der Größenbereich Lücken aufweist.

Um Platz zu sparen ist es vorteilhaft, die beiden Halter dicht nebeneinander anzuordnen. Dies führt dazu, dass nur einer der beiden Halter mit einem Gefäß belegt werden kann. Sollen beide Halter gleichzeitig mit einem Gefäß belegt werden können, so können die beiden Halter auch weiter voneinander separiert angeordnet werden.

Auch ist es möglich die beiden Halter direkt oder schräg übereinander anzuordnen. Es muss nur sichergestellt werden, dass ein Halter bei der Belegung des jeweils anderen Halters mit einem Gefäß nicht stört.

Die Vorrichtung kann eine beliebige Gefäßbehandlungsvorrichtung sein. Beispiele hierfür sind eine Reinigungsmaschine, ein Rinser, ein Füller, ein Verschließer, ein Etikettierer, ein Inspektor oder Ähnliches. Auch kann die Vorrichtung ein Transporteur oder ein Speicher zum Zwischenspeichern von Gefäßen sein.

Die Vorrichtung weist vorteilhafterweise weiterhin eine Einrichtung auf, mit der die Halter mit den Gefäßen belegt werden können. Die Einrichtung kann hierbei so eingestellt werden, dass entweder nur der eine oder nur der andere Halter mit einem Gefäß belegt werden.

Bei dem Verfahren wird eine Vorrichtung mit Gefäßen belegt, wobei Gefäße einer ersten Größe in einen ersten Halter gegeben werden und die Gefäße einer anderen Größe in einen anderen zweiten Halter gegeben werden. Die beiden Halter sind verschieden.

Bevorzugte Ausführungsformen der Vorrichtung und des Verfahrens sollen anhand der Zeichnungen erläutert werden. Dabei zeigt:
- Figur 1: eine schematische dreidimensionale Darstellung einer Vorrichtung;
- Figur 2: eine schematische Draufsicht auf eine Vorrichtung;
- Figur 3: eine schematische Draufsicht auf eine Vorrichtung mit einem Karussell;
- Figur 4: eine schematische Draufsicht auf eine Vorrichtung mit einer linearen Führung.

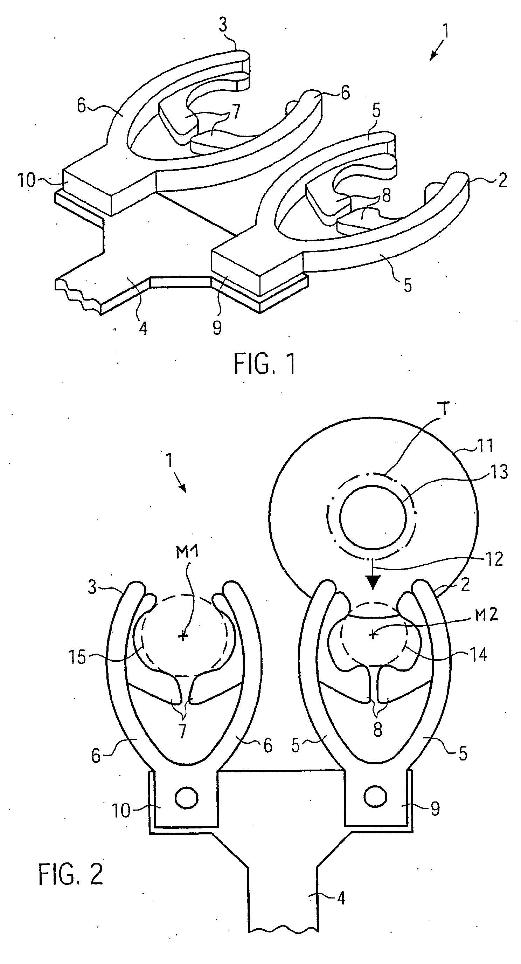

In Figur 1 ist eine Vorrichtung 1 mit einem ersten Halter 2 und einem zweiten anderen Halter 3 für Gefäße wie etwa Flaschen gezeigt. Die beiden Halter 2, 3 sind an einem Halterträger 4 angeordnet, wobei die Halter 2, 3 beispielsweise festgeschraubt sein können. Der Halterträger 4 weist eine Verbreiterung auf, an deren Enden jeweils die Halter 2, 3 angeordnet sind. Die Halter 2, 3 weisen jeweils Verbindungsteile 9, 10 auf, mit denen die Halter 2, 3 an dem Halterträger 4 befestigt werden können.

Der Halter 2 verfügt über zwei äußere bogenförmige Elemente 5, innerhalb derer zwei Formstücke 8 angeordnet sind, die die Größe oder den Größenbereich eines zu haltenden Gefäßes definieren. In gleicher Weise umfasst der Halter 3 zwei äußere bogenförmige Elemente 6 in denen andere Formelemente 7 angeordnet sind, durch die eine andere Größe eines Gefäßes oder ein Größenbereich für Gefäße vorgegeben ist. Die bogenförmigen Elemente 5, 6 können hierbei nach außen elastisch ausgelenkt werden. Dies kann beispielsweise dadurch geschehen, dass ein Gefäß 11 (siehe Figur 2) in Pfeilrichtung 12 auf den Halter 2 zu bewegt wird.

Die äußeren Elemente 5, 6 können auch geradlinig oder gewinkelt sein.

Die Formstücke 7, 8 können jeweils einstückig mit den jeweiligen äußeren Elementen 5, 6 ausgebildet sein, können aber auch aufgesetzt, angeschraubt oder sonst wie an den äußeren Elementen 5, 6 befestigt sein.

In Figur 2 ist ein Gefäß 11 in Draufsicht gezeigt, wobei sowohl der äußere Umfang des Gefäßes 11 als auch der Mündungsumfang 13 dargestellt sind. Hier soll beispielhaft angenommen werden, dass der Halter 2 das Gefäß 11 am Halsumfang 13 unterhalb seines Tragrings T halten soll. Durch Bewegen des Gefäßes 11 in Pfeilrichtung 12 zu dem Halter 2 werden die Formteile 8 auseinandergedrückt entgegen einer federnden Kraft der bogenförmigen Elemente 5. Bei der Endposition (siehe gestrichelte Linie 14) ist das Gefäß 11 in dem Halter 2 formschlüssig gehalten und bezüglich der Mittelachse M2 zentriert. In entsprechender Weise kann ein Gefäß an die gestrichelt dargestellte Position 15 im anderen Halter 3 gebracht werden. Wie in Figur 2 deutlich zu erkennen, ist der Durchmesser des gestrichelten Kreises 15 größer als der des Kreises 14, was bedeutet, dass ein Gefäß 11 mit einem größeren Umfang gehalten und bezüglich der gleichen Mittelachse M1 zentriert werden kann.

Die bogenförmigen Elemente 5, 6 und die Formteile 7, 8 können aus Metall, wie etwa Edelstahl, Kunststoff, Gummi, gummiertem Metall, mit Kunststoff überzogenem Metall oder ähnlichen Werkstoffen gefertigt sein.

Die Elemente 5, 6 können drehbar oder verschiebbar gelagert sein und mit einer Rückstellkraft, beispielsweise durch ein Feder- oder Gummielement, in die Geschlossen-Position vorgespannt sein. Stattdessen oder auch zusätzlich können die Elemente 5, 6 aber auch selber federnd sein. Auch ist es möglich die Elemente 5, 6 durch spezielle Steuereinrichtungen in eine Geöffnet- oder Geschlossen-Position aktiv umlegen zu lassen.

Die bogenförmigen Elemente 5, 6 der beiden Halter 2, 3 sind in Figur 2 gleich groß dargestellt. Sie können jedoch auch verschieden groß sein, sodass sich verschieden große Halter ergeben.

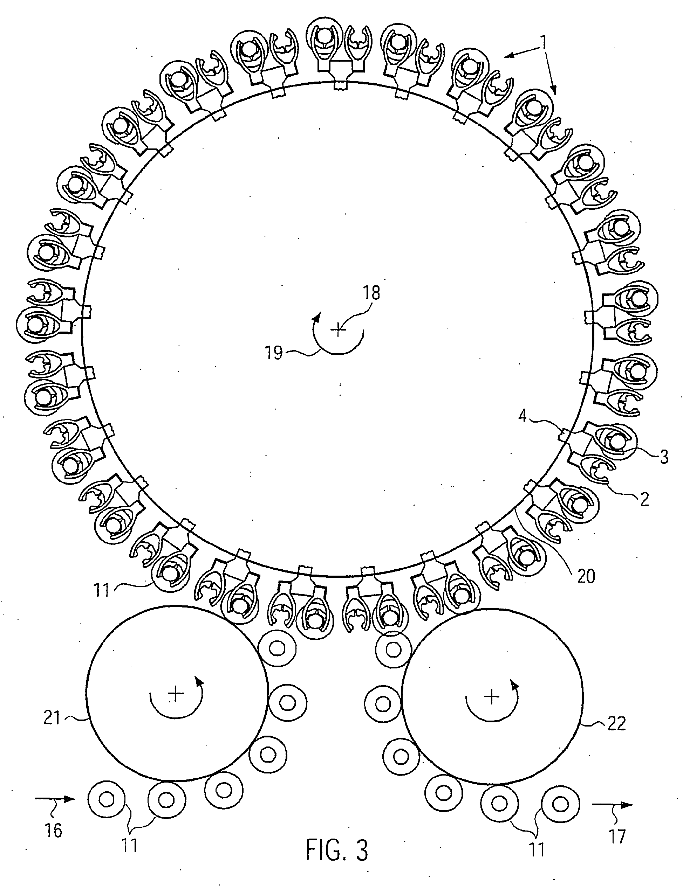

In Figur 3 ist eine Gefäßbehandlungsmaschine mit einem Karussell 20 dargestellt. Das Karussell 20 kann um eine Achse 18 in Pfeilrichtung 19 umlaufen. Am Umfang des Karussells 20 sind mehrere gleichartige Vorrichtungen 1, wie sie in Figuren 1 und 2 dargestellt sind, angeordnet. Neben dem Karussell 20 sind ein Einlaufstern 21 und ein Auslaufstern 22 angeordnet, mit denen Gefäße 11 zum Karussell 20 hinbefördert oder von diesem wegbefördert werden können.

Der Einlaufstern 21 ist so ausgebildet, dass er die Gefäße 11 entweder jeweils an den Halter 2 oder an den Halter 3 übergibt. Hierzu kann der Einlaufstern 21 entsprechend gedreht, verstellt, versetzt oder sonst wie angepasst werden.

Auch ist es möglich, den Einlaufstern nur elektronisch umzurüsten, indem er im Vergleich zu der Positionierung des Karussells 20 eine andere Relativposition annimmt, sodass die Gefäße 11 an den anderen Halter übergeben werden. Entsprechendes gilt für den Auslaufstern 22.

Das Karussell 20 kann das Karussell einer Reinigungsmaschine, eines Rinsers, eines Füllers, eines Etikettierers, eines Verschließers, eines Inspektors oder Ähnlichem sein. Es ist jedoch nicht zwingend, dass eine dieser Vorrichtungen ein Karussell umfasst.

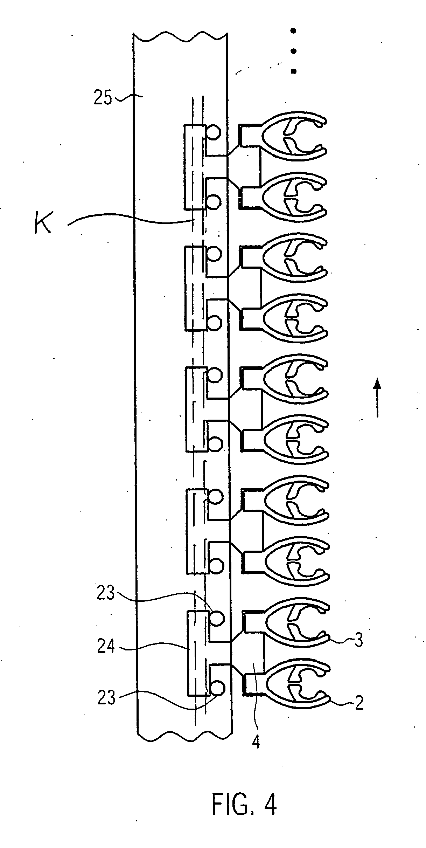

In Figur 4 ist eine Ausführungsform dargestellt, bei der mehrere gleichartige Vorrichtungen 1 an einem Transportelement 24 angeordnet sind. Dieses Transportelement 24 kann entlang einer Führung 25 bewegt werden, wie dies beispielsweise bei Transporteuren oder Speichern vorkommen kann. Die Transporteinrichtung 24 kann beispielsweise über Rollen 23 verfügen. Ein Antrieb für die Transportelemente 24 ist in Figur 4 der Übersichtlichkeit halber nicht dargestellt.

Eine Vorrichtung 1 mit einem ersten und mindestens einem zweiten anderen Halter kann auch an einer umlaufenden Kette, einem umlaufenden Förderband oder Ähnlichem vorgesehen sein. Eine Kette K ist in Fig. 4 strichliert dargestellt.

Zum Belegen der Vorrichtungen 1 und zum Entnehmen der Gefäße 11 bei einem Transporteur oder einem Speicher kann gleichfalls ein Einlaufstern und/oder ein Auslaufstern oder jeweils eine andere geeignete Vorrichtung vorgesehen sein.

Das erfindungsgemäße Verfahren soll anhand von Figur 3 beispielhaft erläutert werden. Die Gefäße 11, zum Beispiel Flaschen, laufen in Pfeilrichtung 16 ein und werden durch den Einlaufstern 21 an das Karussell 20 mit den Vorrichtungen 1, genauer gesagt an jeweils einen Halter 3 übergeben. Nach Umlauf entlang des Umfangs des Karussells 20 werden die Gefäße 11 von dem Auslaufstern 22 übernommen und in Pfeilrichtung 17 abgeführt. Soll eine andere Gefäßsorte 11 verarbeitet werden, so wird der Einlaufstern 21 relativ zu dem Karussell 20 verstellt. Dadurch kann der Einlaufstern die Gefäße 11 anstatt an den Halter 3 an den Halter 2 übergeben. Auch ist es möglich zwei Einlaufsterne 21 vorzusehen, wobei einer für die Belegung der ersten Halter und der andere für die Belegung der zweiten Halter vorgesehen wäre. Entsprechendes gilt für zwei Auslaufsterne 22.

Eine Verfahrensweise mit der Vorrichtung aus Figur 4 ist entsprechend.

Ferner ist es möglich, das Karussell 20 oder die Transportelemente 24 bzw. die Kette K bezüglich Einlaufstern 21 und Auslaufstern 22 zu verstellen und zwar entsprechend dem Abstand von M1 und M2. Hierdurch bleibt die Lage der Gefäße im Raum unverändert und dadurch auch ihre Position gegenüber von Behandlungsorganen, wie z. B. Füllventilen, die synchron zum Karussell mit einem eigenen, bezüglich Einlaufstern und Auslaufstern unverstellbaren Rotor oder Träger umlaufen. Dementsprechend sind die Mittelachsen M1 und M2 auf der gleichen Umlaufbahn angeordnet.

## Patentansprüche

1. Vorrichtung mit einem Halter (2) zum Halten von einem Gefäß, etwa einer Flasche, einer Größe, **gekennzeichnet durch** mindestens einen zweiten, anderen Halter (3) zum Halten von einem Gefäß (11), etwa einer Flasche, einer anderen Größe, wobei der zweite Halter (3) eine andere Größe aufweist als der erste Halter (2).

2. Vorrichtung nach Anspruch 1, **dadurch gekennzeichnet, dass** der erste und der zweite Halter (2, 3) an einem Halterträger (4) angeordnet sind, wobei beide Halter (2, 3) vorzugsweise fest mit dem Halterträger (4) verbunden sind.

3. Vorrichtung nach einem der Ansprüche 1 oder 2, **dadurch gekennzeichnet, dass** die Größe des Gefäßes (11) oder die andere Größe jeweils durch die Halter (2, 3) vorbestimmte Größen im Haltebereich sind.

4. Vorrichtung nach einem der Ansprüche 1 bis 3, **dadurch gekennzeichnet, dass** die Größe des Gefäßes und/oder die anderen Größen jeweils in einem durch die Halter (2, 3) vorgegebenen Größenbereich liegen, wobei die Größenbereiche im Haltebereich verschieden sind, sich jedoch zumindest teilweise überlappen.

5. Vorrichtung nach einem der Ansprüche 1 bis 4, **dadurch gekennzeichnet, dass** die Halter (2, 3) aus Metall wie Edelstahl und/oder einem elastischen Werkstoff wie Kunststoff, Gummi, überzogenem Metall oder Ähnlichem sind.

6. Vorrichtung nach einem der Ansprüche 1 bis 5, **dadurch gekennzeichnet, dass** die Halter (2, 3) nebeneinander und/oder übereinander angeordnet sind, so dass bei Belegung eines Halters (2, 3) mit einem Gefäß in dem zweiten Halter (2,3) kein Gefäß mehr angeordnet werden kann.

7. Vorrichtung nach einem der Ansprüche 1 bis 5, **dadurch gekennzeichnet, dass** beide Halter (2, 3) gleichzeitig mit je einem Gefäß (11) belegt werden können.

8. Vorrichtung nach einem der Ansprüche 1 bis 7, **dadurch gekennzeichnet, dass** die Vorrichtung eine Gefäßbehandlungsvorrichtung wie etwa ein Rinser oder ein Füller oder ein Etikettierer oder eine Reinigungsmaschine oder ein Verschließer oder ein Inspektor oder Ähnliches ist.

9. Vorrichtung nach einem der Ansprüche 1 bis 7, **dadurch gekennzeichnet, dass** die Vorrichtung ein Transporteur oder ein Speicher oder Ähnliches ist.

10. Vorrichtung nach einem der Ansprüche 1 bis 9, **dadurch gekennzeichnet, dass** eine Mehrzahl von ersten und eine Mehrzahl von zweiten Haltern (2, 3) vorgesehen ist, wobei die Anzahl der ersten und die Anzahl der zweiten Halter (2, 3) vorzugsweise gleich ist und sich diese abwechseln.

11. Vorrichtung nach einem der Ansprüche 1 bis 10, **dadurch gekennzeichnet, dass** eine Einrichtung (21) zum Belegen eines Halters (2, 3) mit einem Gefäß vorgesehen ist, wobei die Einrichtung (21) oder die Vorrichtung (1) so eingestellt werden können, dass entweder der eine oder der andere Halter (2, 3) mit einem Gefäß (11) belegt werden kann.

12. Vorrichtung nach einem der Ansprüche 1 bis 11, **dadurch gekennzeichnet, dass** die Halter (2, 3) die Gefäße formschlüssig und ggf. kraftschlüssig erfassen und ggf. zentrieren.

13. Verfahren zum Belegen einer Vorrichtung mit Gefäßen (11), wie etwa Flaschen, wobei die Gefäße (11) einer Größe in einen ersten Halter (2) gegeben werden und die Gefäße einer anderen Größe in einen zweiten anderen Halter (3) gegeben werden, wobei der zweite Halter (3) eine andere Größe aufweist als der erste Halter (2).

## Claims

1. Device with a holder (2) for holding a vessel, such as a bottle, of a certain size, **characterised by** at least a second, different holder (3) for holding a vessel (11), such as a bottle, of a different size, in which the second holder (3) is of a different size to the first holder (2).

2. Device according to claim 1, **characterised in that** the first and the second holder (2, 3) are arranged on a holder carrier (4), in which both holders (2, 3) are preferably firmly connected to the holder carrier (4).

3. Device according to one of claims 1 or 2, **characterised in that** the size of the vessel (11) or the different size are sizes, which are predetermined by the holders (2, 3), in the holding area.

4. Device according to one of claims 1 to 3, **characterised in that** the size of the vessel and/or the different sizes are in a size range, which is preset by the holders (2, 3), in which the size ranges in the holding area are different, but at least partly overlap each other.

5. Device according to one of claims 1 to 4, **characterised in that** the holders (2, 3) are made of metal such as high grade steel and/or a flexible material such as plastic, rubber, covered metal or similar.

6. Device according to one of claims 1 to 5, **characterised in that** the holders (2, 3) are arranged next to each other and/or on top of each other so that, if a holder (2, 3) is loaded with a vessel in the second holder (2, 3), no more vessels may be arranged.

7. Device according to one of claims 1 to 5, **characterised in that** both holders (2, 3) may be loaded with a vessel (11) at the same time.

8. Device according to one of claims 1 to 7, **characterised in that** the device is a vessel handling device, such as a rinsing or a filling or a labelling device or a cleaning machine or a closing or an inspecting device or similar.

9. Device according to one of claims 1 to 7, **characterised in that** the device is a conveying or a storing device or similar.

10. Device according to one of claims 1 to 9, **characterised in that** several first and several second holders (2, 3) are provided, in which the number of first and the number of second holders (2, 3) is preferably the same and these alternate.

11. Device according to one of claims 1 to 10, **characterised in that** equipment (21) for loading a holder (2, 3) with a vessel is provided, in which the equipment (21) or the device (1) may be adjusted so that either one or the other holder (2, 3) may be loaded with a vessel (11).

12. Device according to one of claims 1 to 11, **characterised in that** the holders (2, 3) seize the vessels positively or non-positively if necessary and centre them if necessary.

13. Method for loading a device with vessels (11), such as bottles, in which vessels (11) of a certain size are put into a first holder (2) and vessels of a different size are put into a second, different holder (3), in which the second holder (3) has a different size to the first holder (2).

## Revendications

1. Dispositif comportant un support (2) pour tenir un récipient tel qu'une bouteille d'une certaine dimension,
**caractérisé par**
au moins un second support (3), différent, pour tenir un récipient tel qu'une bouteille d'une autre dimension, le second support (3) ayant une dimension différente de celle du premier support (2).

2. Dispositif selon la revendication 1,
**caractérisé en ce que**
les premier et second supports (2, 3) sont installés sur un porte-support (4), auquel ils sont reliés de préférence solidairement.

3. Dispositif selon la revendication 1 ou 2,
**caractérisé en ce que**
la dimension du récipient (11) ou l'autre dimension sont des grandeurs prédéfinies par les supports (2, 3) dans la zone de fixation.

4. Dispositif selon les revendications 1 à 3,
**caractérisé en ce que**
la dimension du récipient et/ou l'autre dimension se situent dans une plage de dimensions prédéfinies par les supports (2, 3), ces plages de dimensions étant différentes dans la zone de fixation mais elles se chevauchent néanmoins en partie.

5. Dispositif selon les revendications 1 à 4,
**caractérisé en ce que**
les supports (2, 3) sont en métal tel que l'acier inoxydable et/ou en un matériau élastique tel qu'une matière plastique, du caoutchouc, du métal revêtu ou un matériau analogue.

6. Dispositif selon les revendications 1 à 5,
**caractérisé en ce que**
les supports (2, 3) sont juxtaposés et/ou superposés de sorte que lorsque l'un des supports (2, 3) est occupé par un récipient, le second support (2, 3) ne peut pas en recevoir un.

7. Dispositif selon les revendications 1 à 5,
**caractérisé en ce que**
les deux supports (2, 3) sont occupés simultanément chacun par un récipient (11).

8. Dispositif selon les revendications 1 à 7,
**caractérisé en ce que**
le dispositif comporte un dispositif de traitement des récipients tel qu'une installation de rinçage ou une installation de remplissage ou une installation d'étiquetage ou une machine de nettoyage ou une machine de fermeture ou une machine d'inspection ou des machines analogues.

9. Dispositif selon les revendications 1 à 7,
**caractérisé en ce que**
le dispositif est un convoyeur ou un accumulateur ou une installation analogue.

10. Dispositif selon les revendications 1 à 9,
**caractérisé par**
un ensemble de premiers supports (2) et un ensemble de seconds supports (3), l'ensemble des premiers supports (2) et celui des seconds supports (3) étant de préférence identiques et placés en alternance.

11. Dispositif selon les revendications 1 à 10,
**caractérisé par**
une installation (21) pour charger un support (2, 3) avec un récipient, l'installation (21) ou dispositif pouvant être réglé pour charger soit l'un soit l'autre support (2, 3) avec un récipient (11).

12. Dispositif selon les revendications 1 à 11,
**caractérisé en ce que**
les supports (2, 3) assurent le centrage des récipients par une liaison par la forme ou le cas échéant par la force.

13. Procédé de chargement d'un dispositif avec des récipients (11) tels que des bouteilles, les récipients (11) d'une première dimension étant placés dans un premier support (2) et les récipients de l'autre dimension étant placés dans l'autre support (3),
le second support (3) ayant une autre dimension que le premier support (2).
